# EUROPÄISCHE PATENTSCHRIFT

(11) **EP 3 339 632 B1**
(45) Veröffentlichungstag und Bekanntmachung des Hinweises auf die Patenterteilung: **24.02.2021**
(21) Anmeldenummer: 16206459.6
(22) Anmeldetag: 22.12.2016
(51) Int. Cl.: F03D 1/06, F03D 80/30

(54) **ANSCHLUSS- UND BEFESTIGUNGSEINHEIT FÜR EINEN BLITZREZEPTOR ZUR INTEGRATION IN EIN WINDENERGIEANLAGENROTORBLATT**
CONNECTION AND FIXING UNIT FOR A LIGHTNING RECEPTOR FOR INTEGRATION WITH A WIND ENERGY ASSEMBLY ROTOR BLADE
UNITÉ DE RACCORDEMENT ET DE FIXATION POUR UN RÉCEPTEUR D'ÉCLAIRS À INTÉGRER DANS UNE PALE DE ROTOR D'ÉOLIENNE

(43) Veröffentlichungstag der Anmeldung: 27.06.2018
(73) Patentinhaber: Nordex Energy SE & Co. KG, 22419 Hamburg (DE)
(72) Erfinder: Lipka, Thomas, 18055 Rostock (DE); Klein, Hendrik, 18147 Rostock (DE)
(74) Vertreter: Hauck Patentanwaltspartnerschaft mbB

(56) Entgegenhaltungen:
- EP-A1- 2 930 356
- WO-A1-2016/165714
- US-A1- 2009 257 882
- US-A1- 2016 298 608

## Beschreibung

Die Erfindung betrifft eine Anschluss- und Befestigungseinheit für Komponenten eines Blitzschutzsystems, die dazu ausgebildet ist, in ein Windenergieanlagenrotorblatt integriert und mit den Komponenten des Blitzschutzsystems verbunden zu werden.

Derartige Anschluss- und Befestigungseinheiten sind Teil der Blitzschutzeinrichtungen bekannter Windenergieanlagenrotorblätter, die zur Befestigung und/oder zum Anschließen eines Teils der Komponenten des Blitzschutzsystems dienen. Zum Beispiel kann ein an einer Außenseite des Windenergieanlagenrotorblatts angeordneter Blitzrezeptor an der Anschluss- und Befestigungseinheit befestigt werden, und es kann eine elektrische Verbindung zwischen dem Blitzrezeptor und einem zumeist im Inneren des Windenergieanlagenrotorblatts angeordneten Blitzschutzleiter über die Anschluss- und Befestigungseinheit hergestellt werden. Gelegentlich werden solche Anschluss- und Befestigungseinheiten auch als Rezeptorbasen bezeichnet. Es gibt jedoch auch andere Möglichkeiten, um die Blitzrezeptoren zu befestigen und mit einem Blitzschutzleiter zu verbinden.

Beispielsweise zeigt die Druckschrift EP 1 664 528 B1 ein Windenergieanlagenrotorblatt mit Blitzrezeptoren in Form von metallischen Gewindebolzen, die in einer Rotorblattwandung angeordnet und mit unterschiedlichen Verbindungselementen verschraubt sind.

Aus der Druckschrift EP 1 965 076 A1 sind Anschluss- und Befestigungseinheiten in Form massiver Metallplatten bekannt geworden, die in ein Windenergieanlagenrotorblatt eingebettet werden. Blitzrezeptoren werden mit nachträglich in die Metallplatten eingebrachten Gewindebohrungen verschraubt.

Aus der Druckschrift WO 2015/055214 A1 sind ebenfalls Anschluss- und Befestigungseinheiten bekannt geworden, die in Windenergieanlagenrotorblätter eingebettet und bei denen Blitzrezeptoren in nachträglich eingebrachte Gewindebohrungen eingeschraubt werden.

Aus der Druckschrift DE 10 2009 003 405 B4 ist ein Windenergieanlagenrotorblatt mit Blitzrezeptoren bekannt geworden, die unmittelbar in eine Wandung des Rotorblatts integriert sind. In einem Ausführungsbeispiel weist einer der Blitzrezeptoren einen entfernbaren Abschnitt auf, der eine Zugangsöffnung zu einem Innenraum des Rotorblatts verschließt.

Aus der Druckschrift WO 2012/012198 A2 ist ein Blitzrezeptor für ein Windenergieanlagenrotorblatt bekannt geworden. An einer Innenseite einer Wandung des Rotorblatts wird eine Anschluss- und Befestigungseinheit aufgeklebt, in die der Blitzrezeptor von der Außenseite des Rotorblatts aus eingeschraubt wird.

Aus der Druckschrift WO 2014/200333 A1 ist eine Vorrichtung zur Befestigung eines Blitzrezeptors an einer Wandung eines Windenergieanlagenrotorblatts bekannt geworden. Hierzu werden ein inneres und ein äußeres Befestigungselement verwendet. Der Blitzrezeptor kann entweder von der Außenseite des Rotorblatts aus an dem inneren Befestigungselement befestigt werden, oder gemeinsam mit dem inneren Befestigungselement von der Innenseite des Rotorblatts aus an dem äußeren Befestigungselement.

Aus der Druckschrift EP 2 930 357 A1 ist eine Anschluss- und Befestigungseinheit für einen Blitzrezeptor bekannt geworden, die auf die Innenseite einer Rotorblattwandung aufgeklebt wird. Anschließend wird in der Rotorblattwandung eine Durchgangsbohrung hergestellt und ein Blitzrezeptor an der vorgesehenen Position angeordnet.

Aus der Druckschrift EP 2 930 356 A1 ist ein Windenergieanlagenrotorblatt bekannt geworden, dessen Blitzschutzsystem einen Blattspitzenrezeptor und einen damit verbundenen Blitzschutzleiter aufweist. Im Falle eines Blitzschlags wird ein Potentialausgleich zwischen dem Blitzschutzleiter und einer weiteren elektrischen Leitung über eine Vakuumschaltkammer hergestellt. Die Vakuumschaltkammer weist einen luftdicht verschlossenen Hohlraum auf, in dem die Elektroden der Vakuumschaltkammer angeordnet sind. Außerhalb des Hohlraums gibt es Verbindungsmittel, an die einerseits der Blitzschutzleiter, andererseits der weitere elektrische Leiter angeschlossen werden.

6

Aus der Druckschrift US 2016/0298608 A1 ist ein Windenergieanlagenrotorblatt bekannt geworden, in das eine Anschluss- und Befestigungseinheit integriert ist. Sie besteht aus elektrisch isolierenden und elektrisch leitfähigen Lagen, die in eine Herstellungsform für das Windenergieanlagenrotorblatt eingelegt werden.

Davon ausgehend ist es die Aufgabe der Erfindung, eine Anschluss- und Befestigungseinheit für Komponenten eines Blitzschutzsystems zur Verfügung zu stellen, die einfach in ein Windenergieanlagenrotorblatt integriert werden kann, ohne die strukturelle Integrität des Rotorblatts wesentlich zu schwächen, und die eine besonders einfache Befestigung und/oder einen Anschluss von Komponenten eines Blitzschutzsystems ermöglicht, sowie ein entsprechendes Verfahren zur Montage dieser Komponenten.

Diese Aufgabe wird gelöst durch die Anschluss- und Befestigungseinheit mit den Merkmalen des Anspruchs 1 sowie durch das Verfahren mit den Merkmalen des Anspruchs 10. Vorteilhafte Ausgestaltungen sind in den sich jeweils anschließenden Unteransprüchen angegeben.

Die Anschluss- und Befestigungseinheit ist für Komponenten eines Blitzschutzsystems vorgesehen und dazu ausgebildet, in ein Windenergieanlagenrotorblatt integriert zu werden. Sie weist einen luftdicht verschließbaren Hohlraum auf, in dem Verbindungsmittel zur Verbindung mit mindestens einer der Komponenten des Blitzschutzsystems angeordnet sind.

Die Anschluss- und Befestigungseinheit ist dazu ausgebildet, in ein Windenergieanlagenrotorblatt integriert zu werden, d.h. insbesondere in eine Wandung des Windenergieanlagenrotorblatts eingebettet zu werden. Insbesondere kann sie gemeinsam mit in der Wandung enthaltenen Verstärkungsfasern in eine Kunststoffmatrix eingebettet werden, beispielsweise in einem Vakuuminfusionsverfahren oder einem sonstigen Verfahren, bei dem die Verstärkungsfasern und die Anschluss- und Befestigungseinheit in ein zunächst flüssiges, später aushärtendes Kunststoffmaterial eingebettet werden.

Die Verbindungsmittel stellen eine ausreichend stromtragfähige elektrische Verbindung zwischen der mindestens einen Komponente des Blitzschutzsystems und der Anschluss- und Befestigungseinheit bzw. einem mit der Anschluss- und Befestigungseinheit verbundenen Blitzschutzleiter her. Die Verbindungsmittel sind Teil der Anschluss- und Befestigungseinheit und bereits vor dem Integrieren der Anschluss- und Befestigungseinheit in das Windenergieanlagenrotorblatt vorhanden. Sie können daher nach der Integration der Anschluss- und Befestigungseinheit in das Rotorblatt unmittelbar zum Anschließen bzw. Befestigen der Komponenten des Blitzschutzsystems verwendet werden.

Bei der Erfindung sind die Verbindungsmittel in einem luftdicht verschließbaren Hohlraum der Anschluss- und Befestigungseinheit angeordnet, sodass sie beim Integrieren der Anschluss- und Befestigungseinheit in ein Rotorblatt weder beschädigt noch verschmutzt werden. Insbesondere wird verhindert, dass flüssiges Kunststoffmaterial in den Hohlraum und damit in den Bereich der Verbindungsmittel gelangt. Nach dem Integrieren der Anschluss- und Befestigungseinheit in das Windenergieanlagenrotorblatt, insbesondere nach dem Aushärten eines hierfür verwendeten, flüssigen Kunststoffmaterials, ist vorgesehen, den Hohlraum so weit zu öffnen, dass die Verbindungsmittel zugänglich sind. Nachfolgend kann die mindestens eine Komponente des Blitzschutzsystems mit den Verbindungsmitteln verbunden werden, insbesondere durch eine Verschraubung. Dadurch vereinfacht sich die Montage der Komponenten des Blitzschutzsystems und es wird eine positionsgenaue Anordnung der Komponenten erreicht.

Die Komponenten des Blitzschutzsystems sind elektrisch leitfähig und tragen bei bestimmungsgemäßer Verwendung zur Ableitung eines Blitzstroms bei. Sie können beispielsweise einen Blitzschutzleiter, einen Blitzrezeptor, eine Potentialausgleichsverbindung und/oder einen sonstigen Verbindungsleiter umfassen. Insbesondere ist vorgesehen, die Anschluss- und Befestigungseinheit mit mindestens zwei dieser Komponenten zu verbinden, um eine elektrische Verbindung zwischen diesen Komponenten herzustellen. Dabei wird mindestens eine der Komponenten über die in dem Hohlraum angeordneten Verbindungsmittel angeschlossen und/oder befestigt. Ein weiterer Vorteil besteht darin, dass die Anschluss- und Befestigungseinheit mit geeigneten Abmessungen und einer ausreichenden Formstabilität versehen werden kann, um besonders einfach in das Windenergieanlagenrotorblatt integriert werden zu können. Insbesondere kann sie bei der Herstellung einer Wandung des Windenergieanlagenrotorblatts in Sandwichbauweise Teile eines Kernmaterials ersetzen oder bilden, also zwischen zwei Deckschichten der Wandung angeordnet werden. Auch wenn vor und während des Aushärtens eines flüssigen Kunststoffmaterials erhebliche Kräfte auf die Anschluss- und Befestigungseinheit einwirken, beispielsweise bei Herstellung eines Vakuums, behält die Anschluss- und Befestigungseinheit ihre Form, sodass die Herstellung der Wandung nicht beeinträchtigt wird.

In einer Ausgestaltung ist die Anschluss- und Befestigungseinheit so ausgebildet, dass der Hohlraum nach dem Integrieren der Anschluss- und Befestigungseinheit in das Windenergieanlagenrotorblatt von einer Außenseite und/oder Innenseite des Windenergieanlagenrotorblatts aus geöffnet werden kann. Nach dem Öffnen des Hohlraums sind die Verbindungsmittel von außen und/oder innen zugänglich, sodass die Komponenten des Blitzschutzsystems einfach befestigt und angeschlossen werden können. Um die Öffnungsmöglichkeit zu schaffen, kann die Anschluss- und Befestigungseinheit beispielsweise ein entfernbares Element wie einen Stopfen aufweisen. Ebenfalls möglich ist, dass die Anschluss- und Befestigungseinheit eine zum Öffnen des Hohlraums vorgesehene Wandung aufweist und das Öffnen durch Entfernen dieser Wandung ausgeführt wird, beispielsweise durch Herstellen einer Bohrung durch die Wandung hindurch, oder durch Herausbrechen eines hierfür vorgesehenen Abschnitts der Wandung.

Erfindungsgemäß weist die Anschluss- und Befestigungseinheit einen Grundkörper aus einem elektrisch isolierenden Material und einen Anschlusskörper aus einem elektrisch leitfähigen Material auf, wobei Grundkörper und Anschlusskörper fest miteinander verbunden sind und der Hohlraum zwischen Grundkörper und Anschlusskörper angeordnet ist. Die Verbindungsmittel sind an dem Anschlusskörper ausgebildet. Die Kombination von Grundkörper und Anschlusskörper ermöglicht eine besonders einfache Herstellung der Anschluss- und Befestigungseinheit mit dem Hohlraum. Die Ausführung des Grundkörpers aus einem nicht elektrisch leitfähigen Material ermöglicht eine elektrisch isolierte Montage des Anschlusskörpers. Außerdem kann der Grundkörper bei geeigneter Materialwahl eine besonders innige Verbindung mit der Wandung eines Windenergieanlagenrotorblatts eingehen. Hierzu kann insbesondere eine äußere Umfangsfläche der Anschluss- und Befestigungseinheit von dem Grundkörper gebildet sein.

In einer Ausgestaltung ist in einer Einbauposition der Anschluss- und Befestigungseinheit in einem Windenergieanlagenrotorblatt der Grundkörper einer Außenseite des Windenergieanlagenrotorblatts und der Anschlusskörper einem Innenraum des Windenergieanlagenrotorblatts zugewandt. Nach der Integration der Anschluss- und Befestigungseinheit in das Windenergieanlagenrotorblatt ist der Anschlusskörper dadurch besonders einfach von der Innenseite des Rotorblatts aus zugänglich, insbesondere zum Herstellen einer Verbindung zu einem Blitzschutzleiter. Gleichzeitig kann der Anschlusskörper von einer Außenseite des Windenergieanlagenrotorblatts durch den Grundkörper elektrisch isoliert sein, sodass unmittelbaren Blitzeinschlägen in den Anschlusskörper entgegengewirkt wird.

In einer Ausgestaltung ist das elektrisch isolierende Material ein Faserverbundwerkstoff. Dadurch kann die Anschluss- und Befestigungseinheit optimal in eine Wandung eines Windenergieanlagenrotorblatts eingebettet werden. Gleichzeitig erhält der Grundkörper eine hohe Formstabilität und kann mit den gleichen Verfahren bearbeitet werden wie weitere, ggf. aus demselben oder einem ähnlichen Material hergestellte Komponenten des Windenergieanlagenrotorblatts.

In einer Ausgestaltung umfassen die Verbindungsmittel ein erstes Verbindungsmittel, welches ein Innengewinde in dem Anschlusskörper aufweist, wobei das Innengewinde von einer Wandung des Grundkörpers verdeckt ist, die im Bereich des Innengewindes einen Abstand von dem Anschlusskörper aufweist. Von außen betrachtet, befindet sich das Innengewinde hinter der Wandung. Das erste Verbindungsmittel ist für die Montage eines Blitzrezeptors vorgesehen. Dieser kann nach dem Entfernen bzw. Öffnen der Wandung unmittelbar in das Innengewinde eingeschraubt werden, wodurch zugleich eine elektrische und mechanische Verbindung zwischen Blitzrezeptor und Anschlusskörper hergestellt wird. Die Wandung des Grundkörpers kann beim Öffnen des Hohlraums ganz oder teilweise entfernt werden. Da sie einen Abstand vom Anschlusskörper im Bereich des Innengewindes einhält, kann die Wandung besonders einfach entfernt werden, ohne das Innengewinde zu beschädigen. Außerdem wird durch den Abstand vermieden, dass beim Zusammenfügen von Grundkörper und Anschlusskörper (beim Herstellen der Anschluss- und Befestigungseinheit) Abschnitte der Wandung mit dem Anschlusskörper verklebt werden, die später entfernt werden sollen. Der Abstand von dem Innengewinde bzw. dem Anschlusskörper kann sowohl in axialer als auch in radialer Richtung (insbesondere radial nach außen), jeweils bezogen auf das Innengewinde, eingehalten werden.

In einer Ausgestaltung weist der Anschlusskörper eine Durchgangsöffnung auf, die luftdicht mit einem entfernbaren Blindstopfen verschließbar ist. Der Blindstopfen kann zugleich den Hohlraum in der Anschluss- und Befestigungseinheit verschließen. Nach der Integration der Anschluss- und Befestigungseinheit in ein Windenergieanlagenrotorblatt kann der Blindstopfen entfernt werden, um die Durchgangsöffnung freizugeben. Dadurch wird einerseits eine weitere Zugangsmöglichkeit zu dem Hohlraum, insbesondere von einer Innenseite des Windenergieanlagenrotorblatts aus, geschaffen. Andererseits besteht die Möglichkeit, die Anschluss- und Befestigungseinheit sowohl von der Außenseite als auch von der Innenseite des Windenergieanlagenrotorblatts aus zu öffnen, sodass eine Durchgangsöffnung durch die gesamte Anschluss- und Befestigungseinheit und durch eine Wandung des Rotorblatts, in die die Anschluss- und Befestigungseinheit integriert ist, zur Verfügung gestellt wird. Dadurch bietet die Anschluss- und Befestigungseinheit insbesondere von einer Außenseite des Rotorblatts aus einem Zugang zu dessen Innenraum, der für unterschiedliche Wartungs- und Montagearbeiten genutzt werden kann.

In einer Ausgestaltung ist die Anschluss- und Befestigungseinheit mit einem Blitzrezeptor kombiniert, der mit den ersten Verbindungsmitteln verbindbar ist und einen Außendurchmesser aufweist, der größer ist als ein Außendurchmesser des Anschlusskörpers. Diese Abstimmung der Abmessungen des Blitzrezeptors auf den Anschlusskörper führen zu einer effektiven Abschirmung des Anschlusskörpers, wodurch ein Blitzschlag an dem Blitzrezeptor vorbei unmittelbar in den Anschlusskörper hinein vermieden wird. Der Blitzrezeptor ist die mindestens eine Komponente des Blitzschutzsystems, die mit den Verbindungsmitteln in dem Hohlraum verbunden wird.

In einer Ausgestaltung weist die Anschluss- und Befestigungseinheit einen Anschlag auf, an dem der Blitzrezeptor anliegt, wenn er über die ersten Verbindungsmittel mit dem Anschlusskörper verbunden ist. Im Bereich des Anschlags kann insbesondere ein großflächiger Kontakt hergestellt werden, insbesondere mit einer Kontaktfläche von 20 mm² oder mehr. Dies stellt zum einen eine hohe Stromtragfähigkeit der Verbindung zwischen Blitzrezeptor und Anschluss- und Befestigungseinheit sicher. Zum anderen sorgt der Anschlag dafür, dass sich der Blitzrezeptor bei ordnungsgemäßer Verbindung über die ersten Verbindungsmittel mit dem Anschlusskörper in einem definierten Abstand von dem Anschlusskörper bzw. der Anschluss- und Befestigungseinheit befindet. Der Anschlag kann so angeordnet sein, dass der Blitzrezeptor etwa bündig mit einer Außenseite des Windenergieanlagenrotorblatts abschließt, wenn die Anschluss- und Befestigungseinheit in der vorgesehenen Einbauposition angeordnet ist und der Blitzrezeptor ordnungsgemäß mit den ersten Verbindungsmitteln verbunden ist.

In einer Ausgestaltung umfassen die Verbindungsmittel ein zweites Verbindungsmittel, welches in einer in den Hohlraum weisenden Fläche des Anschlusskörpers angeordnet ist und eine Bohrung mit einem Innengewinde aufweist. Das zweite Verbindungsmittel dient zum Anschluss einer elektrischen Leitung. Die elektrische Leitung kann beispielsweise ein Blitzableiter sein oder ein Verbindungsleiter, der eine Verbindung zwischen der Anschluss- und Befestigungseinheit und einem Blitzschutzleiter (Hauptableiter) herstellt. Alternativ kann die elektrische Leitung eine Potentialausgleichsverbindung zwischen zwei Anschluss- und Befestigungseinheiten sein. Jeweils eine der beiden Anschluss- und Befestigungseinheiten kann dabei in eine der beiden Halbschalen des Windenergieanlagenrotorblatts integriert sein. Die Anbindung der elektrischen Leitung erfolgt dabei bevorzugt über eine Lochscheibe, die mit der elektrischen Leitung verbunden und in die Anschluss- und Befestigungseinheit eingesetzt wird. Die Befestigung an der Anschluss- und Befestigungseinheit erfolgt mittels Bolzen an dem zweiten Verbindungsmittel.

In einer Ausgestaltung ist ein drittes Verbindungsmittel vorgesehen, welches an einer in den Innenraum des Windenergieanlagenrotorblatts weisenden Fläche des Anschlusskörpers angeordnet ist und eine Bohrung mit einem Innengewinde umfasst. Das dritte Verbindungsmittel dient zum Anschluss einer weiteren elektrischen Leitung. Es kann außerhalb des luftdicht verschließbaren Hohlraums angeordnet sein. Die weitere elektrische Leitung kann zum Beispiel eine Potentialausgleichsverbindung zwischen der Anschluss- und Befestigungseinheit und einem in der Schale des Windenergieanlagenrotorblatts eingebetteten Blitzableiter ausgebildet.

In einer Ausgestaltung ist die Anschluss- und Befestigungseinheit mit einem Windenergieanlagenrotorblatt kombiniert, das Komponenten eines Blitzschutzsystems aufweist, wobei die Anschluss- und Befestigungseinheit in das Windenergieanlagenrotorblatt integriert ist und die Verbindungsmittel mit mindestens einer der Komponenten des Blitzschutzsystems verbunden sind. Die Anschluss- und Befestigungseinheit kann erste, zweite und/oder dritte Verbindungsmittel aufweisen, wobei das erste Verbindungsmittel mit dem Blitzrezeptor und das zweite und dritte Verbindungsmittel mit elektrischen Leitungen verbunden sein können. Insbesondere kann die Anschluss- und Befestigungseinheit in einem Vakuuminfusionsverfahren in eine Wandung des Windenergieanlagenrotorblatts integriert sein. Zu den Besonderheiten und Vorteilen dieser Ausgestaltung wird auf die vorstehenden Erläuterungen verwiesen.

Die oben genannte Aufgabe wird ebenfalls gelöst durch das Verfahren mit den Merkmalen des Anspruchs 10. Das Verfahren dient zur Montage von Komponenten eines Blitzschutzsystems an einem Windenergieanlagenrotorblatt und weist die folgenden Schritte auf:
- Integrieren einer Anschluss- und Befestigungseinheit in ein Windenergieanlagenrotorblatt, wobei die Anschluss- und Befestigungseinheit einen luftdicht verschließbaren Hohlraum aufweist, in dem Verbindungsmittel zur Verbindung mit mindestens einer der Komponenten des Blitzschutzsystems angeordnet sind,
- Öffnen des Hohlraums vor dem Verbinden der Verbindungsmittel mit der mindestens einen Komponente des Blitzschutzsystems, und
- Verbinden der Verbindungsmittel mit der mindestens einen Komponente des Blitzschutzsystems.

Die Anschluss- und Befestigungseinheit kann gemäß einer oder mehrerer der vorstehend erläuterten Ausgestaltungen ausgestaltet sein. Zur Erläuterung der Merkmale des Verfahrens und der Anschluss- und Befestigungseinheit wird auf die vorstehenden Erläuterungen verwiesen. Es versteht sich, dass die Anschluss- und Befestigungseinheit erste, zweite und/oder dritte Verbindungsmittel aufweisen kann, die in weiteren Verfahrensschritten mit Komponenten des Blitzschutzsystems des Windenergieanlagenrotorblatts verbunden werden.

Vor dem Verbinden der Verbindungsmittel mit der mindestens einen Komponente des Blitzschutzsystems wird der Hohlraum geöffnet, insbesondere von einer Außenseite und/oder Innenseite des Windenergieanlagenrotorblatts aus. Wie bereits erläutert, kann hierzu beispielsweise ein Stopfen der Anschluss- und Befestigungseinheit entfernt oder ein Durchbruch in einer Wandung der Anschluss- und Befestigungseinheit hergestellt werden, z.B. durch Herstellen einer Bohrung oder durch teilweises Herausbrechen der Wandung.

In einer Ausgestaltung ist die mindestens eine Komponente des Blitzschutzsystems ein Blitzrezeptor. Der Blitzrezeptor wird mit den in dem Hohlraum angeordneten Verbindungsmitteln verbunden.

In einer Ausgestaltung weist das Verfahren den folgenden weiteren Schritt auf: Verbinden eines Blitzschutzleiters mit der Anschluss- und Befestigungseinheit. Wie bereits erläutert können hierfür insbesondere dritte Verbindungsmittel der Anschluss- und Befestigungseinheit eingesetzt werden, die außerhalb des Hohlraums angeordnet sind.

In einer Ausgestaltung weist das Windenergieanlagenrotorblatt eine in Sandwichbauweise aufgebaute Wandung auf, in die die Anschluss- und Befestigungseinheit integriert wird, wobei die Anschluss- und Befestigungseinheit beim Herstellen der Wandung zwischen einer ersten Deckschicht und einer zweiten Deckschicht angeordnet wird. Auf die vorstehenden Erläuterungen hierzu wird verwiesen. Insbesondere kann die Anschluss- und Befestigungseinheit seitlich von einem Kernmaterial umgeben sein. Hierzu kann in weiteren Verfahrensschritten eine entsprechende Aussparung in einem Kernmaterial hergestellt werden und die Anschluss- und Befestigungseinheit kann in diese Aussparung eingesetzt werden.

In einer Ausgestaltung weist das Windenergieanlagenrotorblatt zwei Halbschalen auf, wobei die Anschluss- und Befestigungseinheit in eine der Halbschalen integriert wird und das Integrieren der Anschluss- und Befestigungseinheit in eine der Halbschalen während des Vakuuminfusionsprozesses stattfindet. Das Herstellen einer Verbindung zwischen der Anschluss- und Befestigungseinheit und dem ebenfalls in die Halbschale integrierten Blitzschutzleiter erfolgt vor einem Zusammenfügen der beiden Halbschalen und das Verbinden der Verbindungsmittel mit dem Blitzrezeptor danach. Es kann also zunächst eine der beiden Halbschalen einschließlich der Anschluss- und Befestigungseinheit und der Verbindung zum Blitzschutzleiter fertiggestellt werden. Diese Schritte können von einer Innenseite der Halbschale aus ausgeführt werden. Nach dem Zusammenfügen der beiden Halbschalen wird der Blitzrezeptor montiert, was das Verbinden der Verbindungsmittel mit dem Blitzrezeptor umfasst und ggf. auch das vorangehende Öffnen des Hohlraums, um Zugang zu den in dem Hohlraum angeordneten Verbindungsmitteln zu schaffen.

In einer Ausgestaltung wird in die andere der beiden Halbschalen eine weitere Anschluss- und Befestigungseinheit integriert, die einen luftdicht verschließbaren Hohlraum aufweist, in dem Verbindungsmittel zur Verbindung mit mindestens einer der Komponenten des Blitzschutzsystems angeordnet sind. Bereits vor dem Zusammenfügen der beiden Halbschalen kann eine elektrische Verbindung zwischen der weiteren Anschluss- und Befestigungseinheit und einem in der anderen der beiden Halbschalen angeordneten, weiteren Blitzschutzleiter hergestellt werden. Nach dem Zusammenfügen der beiden Halbschalen wird eine elektrische Leitung in das Windenergieanlagenrotorblatt eingesetzt und elektrisch mit den beiden Anschluss- und Befestigungseinheiten verbunden. Das nach dem Zusammenfügen der beiden Halbschalen bewerkstelligte Herstellen einer elektrischen Verbindung zwischen den beiden Anschluss- und Befestigungseinheiten bewirkt dann auf besonders einfache Weise einen zuverlässigen Potentialausgleich zwischen den beiden Blitzschutzleitern.

Nachfolgend wird die Erfindung anhand eines in Figuren dargestellten Ausführungsbeispiels näher erläutert. Es zeigen:
- Fign. 1-3: das Integrieren einer Anschluss- und Befestigungseinheit in eine Halbschale eines Windenergieanlagenrotorblatts, jeweils dargestellt in einem schematischen Querschnitt zu unterschiedlichen Zeitpunkten,
- Fig. 4: einen vergrößerten Ausschnitt der Anordnung aus Fig. 3 nach dem Ausführen weiterer Herstellungsschritte,
- Fig. 5: die Anordnung aus Fig. 4 nach dem Zusammenfügen mit einer weiteren Halbschale, ebenfalls in einer schematischen Querschnittsdarstellung,
- Fig. 6: die Anordnung aus Fig. 5 nach dem Öffnen der Hohlräume der beiden enthaltenen Anschluss- und Befestigungseinheiten, ebenfalls in einer schematischen Querschnittsdarstellung,
- Fig. 7: die Anschluss- und Befestigungseinheiten aus Fig. 6 nebst weiteren Elementen einer Blitzschutzeinrichtung nach dem Herstellen einer Potentialausgleichsverbindung, ebenfalls in einer schematischen Querschnittsdarstellung, wobei die übrigen Elemente der Halbschalen nicht dargestellt sind,
- Fig. 8: die Anordnung aus Figur 7 nach der Montage zweiter Blitzschutzrezeptoren, ebenfalls in einer schematischen Querschnittsdarstellung.

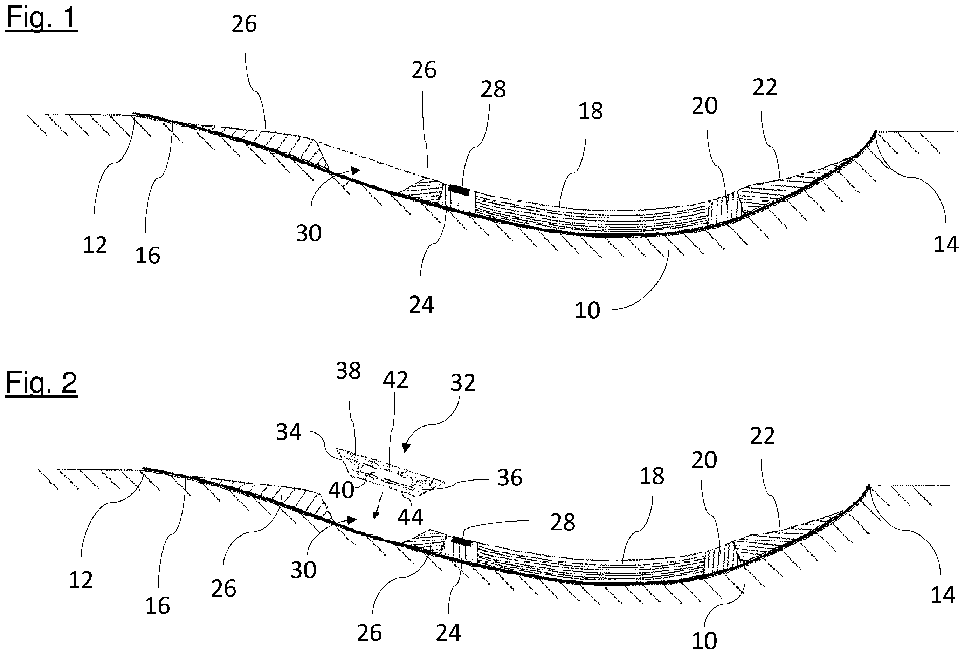

Figur 1 veranschaulicht das Einlegen unterschiedlicher Materialien bei der Herstellung einer Halbschale für ein Windenergieanlagenrotorblatt in eine Herstellungsform 10. Die Herstellungsform 10 ist im Querschnitt dargestellt und weist zwischen einer in der Fig. 1 links dargestellten Profilendkante 12 und einer in der Figur 1 rechts dargestellten Profilnasenkante 14 eines herzustellenden Windenergieanlagenrotorblatts einen gekrümmten Verlauf auf, der einem aerodynamischen Profil des Windenergieanlagenrotorblatts entspricht.

Als unterste, in der Fig. 1 dargestellte Lage befindet sich in der Herstellungsform 10 eine erste Deckschicht 16 aus Verstärkungsfasern, beispielsweise eine oder mehrere Schichten eines Gewebes, insbesondere aus Glasfasern.

Etwa in der Mitte zwischen Profilendkante 12 und Profilnasenkante 14 sind mehrere Lagen unidirektional ausgerichteter Verstärkungsfasern, insbesondere Kohlenstofffasern, angeordnet, die in Längsrichtung des Rotorblatts verlaufen und einen Hauptgurt 18 bilden. Zur Profilnasenkante 14 hin schließen sich an die Verstärkungsfasern des Hauptgurts 18 ein erster nasenkantenseitiger Einleger 20 und ein zweiter nasenkantenseitiger Einleger 22 an. Beide bestehen aus einem Kernmaterial, beispielsweise aus einem geschäumten Kunststoff.

Zur Profilendkante 12 hin schließen sich an die Verstärkungsfasern des Hauptgurts 18 ein erster endkantenseitiger Einleger 24 und ein zweiter endkantenseitiger Einleger 26 an. In einer im Querschnitt rechteckigen Aussparung des ersten endkantenseitigen Einlegers 24 ist ein Blitzschutzleiter 28 angeordnet, dessen Oberseite etwa bündig mit einer Oberseite des ersten endkantenseitigen Einlegers 24 abschließt.

Der zweite endkantenseitige Einleger 26 weist eine Aussparung 30 auf, die sich über die gesamte Dicke des zweiten endkantenseitigen Einlegers 26 erstreckt. Die Aussparung 30 grenzt an die erste Deckschicht 16 an und weist im gezeigten Beispiel eine rotationssymmetrische, konische Form auf. In einer nicht dargestellten Ansicht von oben in die Herstellungsform 10 hinein erscheint die Aussparung 30 kreisförmig.

Fig. 2 zeigt, wie in die Aussparung 30 des zweiten endkantenseitigen Einlegers 26 eine Anschluss- und Befestigungseinheit 32 eingesetzt wird. Die Anschluss- und Befestigungseinheit 32 ist insgesamt scheibenförmig mit einer umlaufenden, konischen Umfangsfläche 34. Die Anschluss- und Befestigungseinheit 32 ist komplementär zu der Aussparung 30 im zweiten endkantenseitigen Einleger 26 geformt.

Die Anschluss- und Befestigungseinheit 32 weist einen Grundkörper 36 aus einem elektrisch isolierenden Material, beispielsweise aus einem faserverstärkten Kunststoffmaterial, und einen Anschlusskörper 38 auf. Der Grundkörper 36 bildet die konische Umfangsfläche 34 und weist außerdem eine kreisförmige, im Wesentlichen ebene Fläche 44 auf, die einer Außenseite des herzustellenden Windenergieanlagenrotorblatts zugewandt ist und nach dem Einsetzen der Anschluss- und Befestigungseinheit 32 in die Aussparung 30 an die erste Deckschicht 16 grenzt.

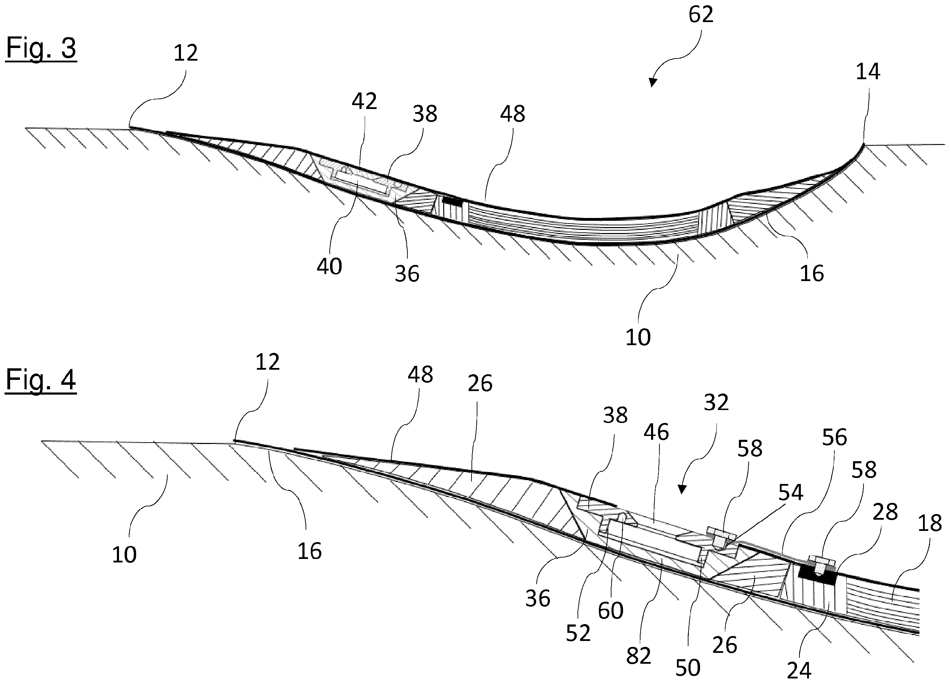

Der Anschlusskörper 38 besteht aus einem elektrisch leitfähigen Material, beispielsweise aus Kupfer, Aluminium oder Edelstahl, und ist im Wesentlichen rotationssymmetrisch ausgebildet. In seiner Mitte weist der Anschlusskörper 38 eine Durchgangsöffnung 46 (siehe Fig. 4) auf, die von einem Blindstopfen 42 verschlossen ist. Dadurch ist der zwischen dem Grundkörper 36 und dem Anschlusskörper 38 ausgebildete Hohlraum 40 luftdicht verschlossen.

Nach dem Einsetzen der Anschluss- und Befestigungseinheit 32 in die Aussparung 30 wird die gesamte in der Herstellungsform 10 befindliche Anordnung mit einer zweiten Deckschicht 48 aus Verstärkungsfasern abgedeckt (siehe Fig. 3). Die Verstärkungsfasern der zweiten Deckschicht 48 können insbesondere in Form einer Schicht oder mehrerer Schichten eines Gewebes, beispielsweise aus Glasfasern, in die Herstellungsform 10 eingelegt werden. Die Anschluss- und Befestigungseinheit 32 ist zwischen der ersten Deckschicht 16 und der zweiten Deckschicht 48 eingebettet und übernimmt dort die Funktion eines Kernmaterials.

Anschließend wird ein flüssiges Kunststoffmaterial in die Herstellungsform 10 eingebracht, insbesondere in einem Vakuuminfusionsverfahren. Alle in der Herstellungsform 10 befindlichen Elemente (wie in Fig. 3 gezeigt) werden dadurch in eine Kunststoffmatrix eingebettet. Freiräume zwischen den in der Herstellungsform 10 befindlichen Elementen, insbesondere zwischen den unterschiedlichen Schichten aus Verstärkungsfasern, den verschiedenen Einlegern 20 bis 26 und der Anschluss- und Befestigungseinheit 32 werden mit dem Kunststoffmaterial ausgefüllt und dadurch dauerhaft miteinander verklebt. Wegen des luftdichten Abschlusses des Hohlraums 40 gelangt jedoch kein Kunststoffmaterial in die Anschluss- und Befestigungseinheit 32. Nach dem Einbringen des Kunststoffmaterials härtet dieses in der Herstellungsform 10 aus, wodurch die Halbschale 62 im Wesentlichen fertiggestellt ist.

Fig. 4 zeigt einen Ausschnitt aus der Fig. 3, in dem die Anschluss- und Befestigungseinheit 32 angeordnet ist. Nach dem Aushärten des Kunststoffmaterials wurde die zweite Deckschicht 48 im Bereich der Anschluss- und Befestigungseinheit 32 teilweise entfernt, insbesondere oberhalb einer in dem Anschlusskörper 38 ausgebildeten Durchgangsöffnung 46. Der Blindstopfen 42, mit dem der Hohlraum 40 innerhalb der Anschluss- und Befestigungseinheit 32 und die Durchgangsöffnung 46 während des Einbringens und Aushärtens des flüssigen Kunststoffmaterials luftdicht verschlossen war, wurde nach dem Entfernen der zweiten Deckschicht 48 ebenfalls entfernt.

Fig. 4 lässt erkennen, dass der Anschlusskörper 38 eine scheibenförmige Grundplatte aufweist, in deren Mitte die Durchgangsöffnung 46 ausgebildet ist. Eine Oberseite der Grundplatte ist der zweiten Deckschicht 48 zugewandt, ebenso einem Innenraum des herzustellenden Windenergieanlagenrotorblatts. Die scheibenförmige Grundplatte geht an ihrer Unterseite in einen rohrförmigen Abschnitt 50 über, an dessen Innenseite ein Innengewinde 52 ausgebildet ist.

Das Innengewinde 52 bildet die ersten Verbindungsmittel der Anschluss- und Befestigungseinheit 32. Das Innengewinde 52 weist einen Abstand zu einer Wandung 82 des Grundkörpers 36 auf, die das Innengewinde 52 verdeckt. Dieser Abstand erstreckt sich bezogen auf das Innengewinde 52 in axialer Richtung, in Richtung zur ersten Deckschicht 16 hin. Zwischen dem freien Ende des Innengewindes 52 und dem Grundkörper 36 gibt es außerdem einen Abstand in radialer Richtung nach außen.

Die Anschluss- und Befestigungseinheit 32 weist außerdem zweite Verbindungsmittel in Form einer Gewindebohrung 54 an der Oberseite der scheibenförmigen Grundplatte des Anschlusskörpers 38 auf. Diese zweiten Verbindungsmittel dienen zur elektrischen Verbindung mit dem Blitzschutzleiter 28. Hierzu zeigt Fig. 4, dass ein streifenförmiger Verbindungsleiter 56 mit jeweils einem Gewindebolzen 58 einerseits mit dem Anschlusskörper 38, andererseits mit dem Blitzschutzleiter 28 verschraubt ist.

Außerdem weist die Anschluss- und Befestigungseinheit 32 dritte Verbindungsmittel in Form einer weiteren Gewindebohrung 60 auf, die innerhalb des rohrförmigen Abschnitts 50 in einer der ersten Deckschicht 16 zugewandten Außenseite der scheibenförmigen Grundplatte des Anschlusskörpers 38 angeordnet ist, benachbart zu der Durchgangsöffnung 46. Alle bislang erläuterten Fertigungsschritte, bis zu dem in der Figur 4 gezeigten Zustand, können innerhalb der Herstellungsform 10 ausgeführt werden.

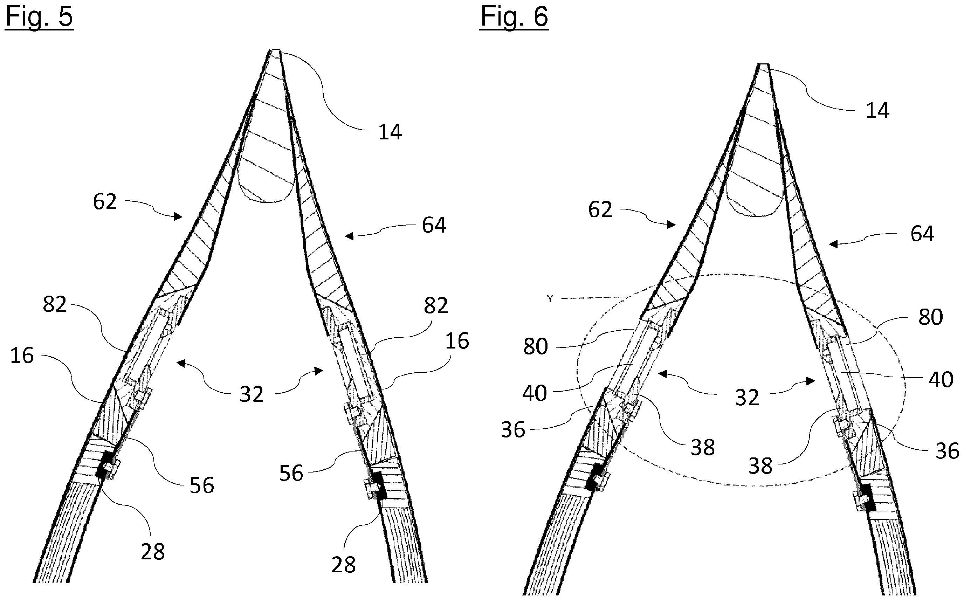

Anschließend wird die in der Herstellungsform 10 gefertigte Halbschale mit einer weiteren Halbschale 64 zusammengefügt, wie ausschnittsweise im Querschnitt in der Fig. 5 dargestellt. Das Zusammenfügen erfolgt durch Verkleben der beiden Halbschalen 62, 64 unter anderem wie in der Figur 5 gezeigt im Bereich der Profilendkanten 14. Die weitere Halbschale 64 entspricht hinsichtlich ihres Aufbaus der Halbschale 62, deren Herstellung anhand der Figuren 1 bis 4 erläutert wurde, und weist ebenfalls eine Anschluss- und Befestigungseinheit 32 und einen damit verbundenen Blitzschutzleiter 28 auf. Man erkennt, dass die beiden Anschluss- und Befestigungseinheiten 32 einander gegenüberliegend angeordnet sind.

Fig. 6 zeigt die Anordnung aus Fig. 5 nach dem Öffnen der beiden Hohlräume 40 der Anschluss- und Befestigungseinheiten 32, jeweils von einer Außenseite des aus den zusammengefügten Halbschalen 62, 64 bestehenden Windenergieanlagenrotorblatts. Hierzu wurde jeweils von der Außenseite aus eine Bohrung 80 durch die erste Deckschicht 16 und eine Wandung 82, die die kreisförmige Fläche 44 des jeweils angrenzenden Grundkörpers 36 bildet, hindurch ausgeführt, mit einem Durchmesser, der einem mittleren Durchmesser des rohrförmigen Abschnitts 50 der Anschlusskörper 38 entspricht.

Um diese Bohrung 80 an der gewünschten Stelle auszuführen, können die Anschluss- und Befestigungseinheiten 32 von der Außenseite des Rotorblatts aus einfach lokalisiert werden, weil die Anschlusskörper 38 bzw. die Stirnseiten deren rohrförmiger Abschnitte 50 und/oder die innerhalb davon angeordneten Hohlräume 40 und/oder die Durchgangsöffnungen 46 von der Außenseite aus sichtbar sind.

Fig. 6 zeigt die Anordnung aus Fig. 4 nach dem Herstellen der beiden Bohrungen 80. Die ersten Verbindungsmittel in Form der Innengewinde 52 liegen nun frei und sind von der Außenseite des Rotorblatts aus zugänglich. Außerdem ist nun auch eine Zugangsmöglichkeit von der Außenseite des Rotorblatts durch die Durchgangsöffnungen 46 hindurch in den Innenraum des Rotorblatts gegeben.

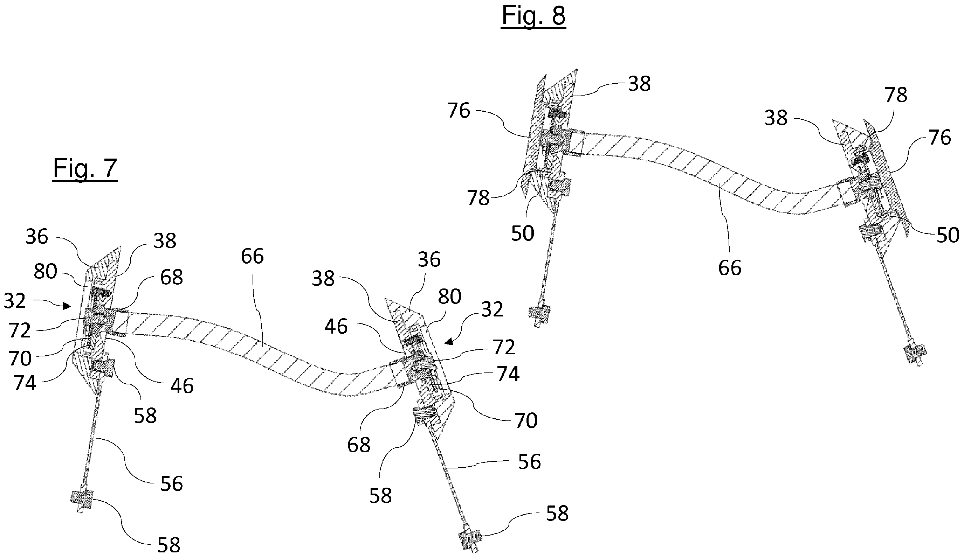

Fig. 7 zeigt die beiden Anschluss- und Befestigungseinheiten 32, die jeweils über eine Verbindungsleitung 56 mit einem in der betreffenden Halbschale 62, 64 angeordneten Blitzschutzleiter 28, der in der Fig. 7 nicht gezeigt ist, verbunden sind. Außerdem zeigt Fig. 7 eine in die Anordnung der Fig. 6, also nach dem Zusammenfügen der beiden Halbschalen 62, 64, in das Windenergieanlagenrotorblatt eingesetzte elektrische Leitung 66, die einen Potentialausgleich zwischen den beiden Anschluss- und Befestigungseinheiten 32 und den damit verbundenen Blitzschutzleitern 28 herstellt.

Die elektrische Leitung 66 ist so bemessen, dass sie sich zwischen den beiden Anschluss- und Befestigungseinheiten 32 durch den Innenraum des Rotorblatts hindurch in direkter Linie erstreckt, sodass sie keiner gesonderten Befestigung bedarf. Die elektrische Leitung 66 weist an ihren beiden Enden Anschlussstücke 68 auf, die jeweils ein Innengewinde aufweisen. Die Anschlussstücke 68 sind innerhalb der Durchgangsöffnungen 46 der Anschlusskörper 38 angeordnet. An den Stirnseiten der Anschlussstücke 68 ist jeweils eine Scheibe 70 aus Metall angeordnet, die eine Öffnung aufweist, durch die ein Gewindebolzen 72 hindurchgeführt und in ein Innengewinde eines Anschlussstücks 68 eingeschraubt ist. Die Scheiben 70 ihrerseits liegen, ggf. unter Hinzufügung einer oder mehrerer Distanzscheiben 74, an einer Innenseite einer scheibenförmigen Grundplatte eines Anschlusskörpers 38 an und sind mit diesem über die ein drittes Verbindungsmittel bildende, weitere Gewindebohrung 60 (siehe Fig. 4) verschraubt. Die Scheiben 70 nebst Distanzscheiben 74 sind jeweils innerhalb eines Hohlraums 40 einer Anschluss- und Befestigungseinheit 32 angeordnet.

Fig. 8 zeigt die Anordnung aus Fig. 7, nachdem in jede der Anschluss- und Befestigungseinheiten 32 ein Blitzrezeptor 76 eingeschraubt wurde. Jeder Blitzrezeptor 76 weist eine kreisscheibenförmige Platte mit konischem Rand und einen konzentrisch an dessen Innenseite angeordneten, rohrförmigen Abschnitt 78 auf, der ein Außengewinde aufweist, das in ein Innengewinde 52 eines rohrförmigen Abschnitts 50 eines Anschlusskörpers 38 eingeschraubt ist. Dabei liegt die Stirnseite des rohrförmigen Abschnitts 78 jedes Blitzrezeptors 76 an der scheibenförmigen Grundplatte eines Anschlusskörpers 38 an, die einen Anschlag bildet und die relative Lage des Blitzrezeptors 76 zu der Anschluss- und Befestigungseinheit 32 vorgibt. Der Anschlag ist so angeordnet, dass die kreisscheibenförmigen Platten der Blitzrezeptoren 76 im Wesentlichen an einer der ersten Deckschichten 16 der betreffenden Halbschale 62, 64 anliegen bzw. eine dort entstehende, kleine Fuge einfach abgedichtet werden kann.

### Liste der verwendeten Bezugszeichen:

- 10: Herstellungsform
- 12: Profilendkante
- 14: Profilnasenkante
- 16: erste Deckschicht
- 18: Hauptgurt
- 20: erster nasenkantenseitiger Einleger
- 22: zweiter nasenkantenseitiger Einleger
- 24: erster endkantenseitiger Einleger
- 26: zweiter endkantenseitiger Einleger
- 28: Blitzschutzleiter
- 30: Aussparung
- 32: Anschluss- und Befestigungseinheit
- 34: konische Umfangsfläche
- 36: Grundkörper
- 38: Anschlusskörper
- 40: Hohlraum
- 42: Blindstopfen
- 44: kreisförmige Fläche
- 46: Durchgangsöffnung
- 48: zweite Deckschicht
- 50: rohrförmiger Abschnitt
- 52: Innengewinde
- 54: Gewindebohrung
- 56: Verbindungsleiter
- 58: Gewindebolzen
- 60: weitere Gewindebohrung
- 62: Halbschale
- 64: weitere Halbschale
- 66: elektrische Leitung
- 68: Anschlussstück
- 70: Scheibe
- 72: Gewindebolzen
- 74: Distanzscheibe
- 76: Blitzrezeptor
- 78: rohrförmiger Abschnitt
- 80: Bohrung
- 82: Wandung

## Patentansprüche

1. Anschluss- und Befestigungseinheit (32) für Komponenten eines Blitzschutzsystems, wobei die Anschluss- und Befestigungseinheit (32) dazu ausgebildet ist, in ein Windenergieanlagenrotorblatt integriert und mit den Komponenten des Blitzschutzsystems verbunden zu werden, wobei die Anschluss- und Befestigungseinheit (32) einen luftdicht verschließbaren Hohlraum (40) aufweist, in dem Verbindungsmittel zum Anschließen und/oder Befestigen mindestens einer der Komponenten des Blitzschutzsystems angeordnet sind, **dadurch gekennzeichnet, dass** die Anschluss- und Befestigungseinheit (32) einen Grundkörper (36) aus einem elektrisch isolierenden Material und einen Anschlusskörper (38) aus einem elektrisch leitfähigen Material aufweist, wobei Grundkörper (36) und Anschlusskörper (38) fest miteinander verbunden sind und der Hohlraum (40) zwischen Grundkörper (36) und Anschlusskörper (38) angeordnet ist.

2. Anschluss- und Befestigungseinheit (32) nach Anspruch 1, **dadurch gekennzeichnet, dass** in einer Einbauposition der Anschluss- und Befestigungseinheit (32) in einem Windenergieanlagenrotorblatt der Grundkörper (36) einer Außenseite des Windenergieanlagenrotorblatts und der Anschlusskörper (38) einem Innenraum des Windenergieanlagenrotorblatts zugewandt ist.

3. Anschluss- und Befestigungseinheit (32) nach Anspruch 1 oder 2, **dadurch gekennzeichnet, dass** die Verbindungsmittel ein erstes Verbindungsmittel umfassen, welches ein Innengewinde (52) in dem Anschlusskörper (38) aufweist, wobei das Innengewinde (52) hinter einer Wandung (82) des Grundkörpers (36) angeordnet ist, die im Bereich des Innengewindes (32) einen Abstand von dem Anschlusskörper (38) aufweist.

4. Anschluss- und Befestigungseinheit (32) nach einem der Ansprüche 1 bis 3, **dadurch gekennzeichnet, dass** der Anschlusskörper (38) eine Durchgangsöffnung (46) aufweist, die luftdicht mit einem entfernbaren Blindstopfen (42) verschließbar ist.

5. Anschluss- und Befestigungseinheit (32) nach Anspruch 3 oder 4 mit einem Blitzrezeptor (76), der mit dem ersten Verbindungsmittel verbindbar ist und einen Außendurchmesser aufweist, der größer ist als ein Außendurchmesser des Anschlusskörpers (38).

6. Anschluss- und Befestigungseinheit (32) nach Anspruch 5, **dadurch gekennzeichnet, dass** die Anschluss- und Befestigungseinheit (32) ein Anschlag aufweist, an dem der Blitzrezeptor (76) anliegt, wenn er über das erste Verbindungsmittel mit dem Anschlusskörper (38) verbunden ist.

7. Anschluss- und Befestigungseinheit (32) nach einem der Ansprüche 1 bis 6, **dadurch gekennzeichnet, dass** die Verbindungsmittel ein zweites Verbindungsmittel umfassen, welches eine Bohrung (60) mit einem Innengewinde aufweist, wobei die Bohrung (60) in einer in den Hohlraum weisenden Fläche des Anschlusskörpers (36) angeordnet ist.

8. Anschluss- und Befestigungseinheit (32) nach einem der Ansprüche 1 bis 7, **dadurch gekennzeichnet, dass** ein drittes Verbindungsmittel vorgesehen ist, welches an einer in den Innenraum des Windenergieanlagenrotorblatts weisenden Fläche des Anschlusskörpers angeordnet ist und eine Bohrung mit einem Innengewinde umfasst.

9. Windenergieanlagenrotorblatt mit einer Anschluss- und Befestigungseinheit (32) nach einem der Ansprüche 1 bis 8, wobei das Windenergieanlagenrotorblatt Komponenten eines Blitzschutzsystems aufweist und die Anschluss- und Befestigungseinheit (32) in das Windenergieanlagenrotorblatt integriert ist und die Verbindungsmittel mit mindestens einer der Komponenten des Blitzschutzsystems verbunden sind.

10. Verfahren zur Montage von Komponenten eines Blitzschutzsystems an einem Windenergieanlagenrotorblatt mit den folgenden Schritten:
• Integrieren einer Anschluss- und Befestigungseinheit (32) in ein Windenergieanlagenrotorblatt, wobei die Anschluss- und Befestigungseinheit (32) einen luftdicht verschließbaren Hohlraum (40) aufweist, in dem Verbindungsmittel zur Verbindung mit mindestens einer der Komponenten des Blitzschutzsystems angeordnet sind, wobei die Anschluss- und Befestigungseinheit (32) einen Grundkörper (36) aus einem elektrisch isolierenden Material und einen Anschlusskörper (38) aus einem elektrisch leitfähigen Material aufweist, wobei Grundkörper (36) und Anschlusskörper (38) fest miteinander verbunden sind und der Hohlraum (40) zwischen Grundkörper (36) und Anschlusskörper (38) angeordnet ist,
• Öffnen des Hohlraums (40) vor dem Verbinden der Verbindungsmittel mit der mindestens einen Komponente des Blitzschutzsystems, und
• Verbinden der Verbindungsmittel mit der mindestens einen Komponente des Blitzschutzsystems.

11. Verfahren nach Anspruch 10, **dadurch gekennzeichnet, dass** die mindestens eine Komponente des Blitzschutzsystems ein Blitzrezeptor (76) ist.

12. Verfahren nach Anspruch 10 oder 11, **gekennzeichnet durch** den weiteren Schritt:
• Verbinden eines Blitzschutzleiters (28) mit der Anschluss- und Befestigungseinheit (32).

13. Verfahren nach einem der Ansprüche 10 bis 12, **dadurch gekennzeichnet, dass** das Windenergieanlagenrotorblatt eine in Sandwichbauweise aufgebaute Wandung aufweist, in die die Anschluss- und Befestigungseinheit (32) integriert wird, wobei die Anschluss- und Befestigungseinheit (32) beim Herstellen der Wandung zwischen einer ersten Deckschicht (16) und einer zweiten Deckschicht (46) angeordnet wird.

14. Verfahren nach Anspruch 12 oder 13, **dadurch gekennzeichnet, dass** das Windenergieanlagenrotorblatt zwei Halbschalen (62, 64) aufweist, wobei die Anschluss- und Befestigungseinheit (32) in eine der Halbschalen (62) integriert wird und das Integrieren der Anschluss- und Befestigungseinheit (32) in eine der Halbschalen (62) sowie das Verbinden der Anschluss- und Befestigungseinheit (32) mit dem Blitzschutzleiter (28) vor einem Zusammenfügen der beiden Halbschalen (62, 64) und das Verbinden der Verbindungsmittel mit dem Blitzrezeptor (76) danach erfolgt.

15. Verfahren nach Anspruch 14, **dadurch gekennzeichnet, dass** in die andere der beiden Halbschalen (62) eine weitere Anschluss- und Befestigungseinheit (32) integriert wird, die einen luftdicht verschließbaren Hohlraum (40), in dem Verbindungsmittel zur Verbindung mit mindestens einer der Komponenten des Blitzschutzsystems angeordnet sind, aufweist, wobei nach dem Zusammenfügen der beiden Halbschalen (62, 64) eine elektrische Leitung (66) in das Windenergieanlagenrotorblatt eingesetzt und elektrisch mit den Verbindungsmitteln der beiden Anschluss- und Befestigungseinheiten (32) verbunden wird.

## Claims

1. A connection and fastening unit (32) for components of a lightning protection system, the connection and fastening unit (32) being realized for the purpose of being integrated in a wind turbine rotor blade and for being connected to the components of the lightning protection system, wherein the connection and fastening unit (32) comprises a cavity (40) which can be closed in an airtight manner and in which connecting means for connecting and/or assembling at least one of the components of the lightning protection system are arranged, **characterized in that** the connection and fastening unit (32) comprises a basic body (36) produced from an electrically insulating material and a connection body (38) produced from an electrically conducting material, the basic body (36) and the connection body (38) being fixedly connected together and the cavity (40) being arranged between the basic body (36) and the connection body (38).

2. The connection and fastening unit (32) as claimed in claim 1, wherein, in an installation position of the connection and fastening unit (32) in a wind turbine rotor blade, the basic body (36) faces an outside surface of the wind turbine rotor blade and the connection body (38) faces an interior of the wind turbine rotor blade.

3. The connection and fastening unit (32) as claimed in claim 1 or 2, wherein the connection means comprise a first connection means which comprises an internal thread (52) in the connection body (38), the internal thread (52) being concealed by a wall (82) of the basic body (36) which is at a distance from the connection body (38) in the region of the internal thread (32).

4. The connection and fastening unit (32) as claimed in one of claims 1 to 3, wherein the connection body (38) comprises a through opening (46), which can be closed in an airtight manner with a removable blind plug (42).

5. The connection and fastening unit (32) as claimed in claim 3 or 4 with a lightning receptor (76), which is connectable to the first connecting means and comprises an outer diameter which is greater than an outer diameter of the connection body (38).

6. The connection and fastening unit (32) as claimed in claim 5, wherein the connection and fastening unit (32) comprises a stop against which the lightning receptor (76) abuts when it is connected to the connection body (38) via the first connecting means.

7. The connection and fastening unit (32) as claimed in one of claims 1 to 6, wherein the connecting means include a second connecting means which comprises a bore (60) with an internal thread, the bore (60) being arranged in a surface of the connection body (36) that points into the cavity.

8. The connection and fastening unit (32) as claimed in one of claims 1 to 7, wherein a third connecting means is provided which is arranged on a surface of the connection body that points into the interior of the wind turbine rotor blade and includes a bore with an internal thread.

9. A wind turbine rotor blade having a connection and fastening unit (32) as claimed in one of claims 1 to 8, the wind turbine rotor blade comprising components of a lightning protection system and the connection and fastening unit (32) being integrated in the wind turbine rotor blade and the connecting means being connected to at least one of the components of the lightning protection system.

10. A method for mounting components of a lightning protection system on a wind turbine rotor blade comprising the following steps:
• integrating a connection and fastening unit (32) into a wind turbine rotor blade, the connection and fastening unit (32) comprising a cavity (40) which can be closed in an airtight manner and in which connecting means for connection to at least one of the components of the lightning protection system are arranged,
• opening the cavity (40) before connecting the connecting means to the at least one component of the lightning protection system, and
• connecting the connecting means to the at least one component of the lightning protection system.

11. The method as claimed in claim 10, wherein the at least one component of the lightning protection system is a lightning receptor (76).

12. The method as claimed in claim 10 or 11, which comprises the further step of:
• connecting a lightning protector conductor (28) to the connection and fastening unit (32).

13. The method as claimed in one of claims 10 to 12, wherein the wind turbine rotor blade comprises a wall of a sandwich construction into which the connection and fastening unit (32) is integrated, the connection and fastening unit (32) being arranged between a first cover layer (16) and a second cover layer (46) when producing the wall.

14. The method as claimed in claim 12 or 13, wherein the wind turbine rotor blade comprises two half shells (62, 64), the connection and fastening unit (32) being integrated into one of the half shells (62) and the integration of the connection and fastening unit (32) into one of the half shells (62) and the connection of the connection and fastening unit (32) to the lightning protector conductor (28) taking place prior to a joining together of the two half shells (62, 64) and the connection of the connecting means to the lightning receptor (76) taking place thereafter.

15. The method as claimed in claim 14, wherein a further connection and fastening unit (32), which comprises a cavity (40) which can be closed in an airtight manner and in which connecting means for connection to at least one of the components of the lightning protection system are arranged, is integrated into the other of the two half shells (62), an electric line (66) being inserted into the wind turbine rotor blade and electrically connected to the connecting means of the two connection and fastening units (32) after the joining together of the two half shells (62, 64).

## Revendications

1. Unité de raccordement et de fixation (32) pour des composants d'un système de protection contre la foudre, l'unité de raccordement et de fixation (32) étant conçue pour être intégrée dans une pale de rotor d'éolienne et assemblée avec les composants du système de protection contre la foudre, dans laquelle
- l'unité de raccordement et de fixation (32) présente un espace creux (40) susceptible d'être fermé hermétiquement, dans lequel sont disposés des moyens d'assemblage pour le raccordement et/ou la fixation de l'un au moins des composants du système de protection contre la foudre, **caractérisée en ce que**
- l'unité de raccordement et de fixation (32) présente un corps de base (36) constitué d'un matériau électriquement isolant et un corps de raccordement (38) constitué d'un matériau électriquement conducteur, le corps de base (36) et le corps de raccordement (38) étant assemblés fixement l'un avec l'autre et l'espace creux (40) étant disposé entre le corps de base (36) et le corps de raccordement (38).

2. Unité de raccordement et de fixation (32) selon la revendication 1, **caractérisée en ce que** dans une position de montage de l'unité de raccordement et de fixation (32) dans une pale de rotor d'éolienne, le corps de base (36) est tourné vers un côté extérieur de la pale de rotor d'éolienne et le corps de raccordement (38) vers un espace intérieur de la pale de rotor d'éolienne.

3. Unité de raccordement et de fixation (32) selon la revendication 1 ou 2, **caractérisée en ce que** les moyens d'assemblage comportent un premier moyen d'assemblage présentant un filetage intérieur (52) dans le corps de raccordement (38), le filetage intérieur (52) étant disposé derrière une paroi (82) du corps de base (36) présentant un espacement par rapport au corps de raccordement (38) dans la région du filetage intérieur (32).

4. Unité de raccordement et de fixation (32) selon l'une des revendications 1 à 3, **caractérisée en ce que** le corps de raccordement (38) présente une ouverture de passage (46) susceptible d'être fermée hermétiquement à l'aide d'un bouchon d'obturation (42).

5. Unité de raccordement et de fixation (32) selon la revendication 3 ou 4, comprenant un récepteur de foudre (76) susceptible d'être assemblé avec le premier moyen d'assemblage et présentant un diamètre extérieur supérieur à un diamètre extérieur du corps de raccordement (38).

6. Unité de raccordement et de fixation (32) selon la revendication 5, **caractérisée en ce que** l'unité de raccordement et de fixation (32) présente une butée sur laquelle s'appuie le récepteur de foudre (76), lorsque celui-ci est assemblé avec le corps de raccordement (38) par le biais du premier moyen d'assemblage.

7. Unité de raccordement et de fixation (32) selon l'une des revendications 1 à 6, **caractérisée en ce que** les moyens d'assemblage comportent un deuxième moyen d'assemblage présentant un alésage (60) avec un filetage intérieur, l'alésage (60) étant disposé dans une surface du corps de raccordement (36) tournée vers l'espace creux.

8. Unité de raccordement et de fixation (32) selon l'une des revendications 1 à 7, **caractérisée en ce qu'**il est prévu un troisième moyen d'assemblage, lequel est disposé au niveau d'une surface du corps de raccordement tournée vers l'espace intérieur de la pale de rotor d'éolienne et comporte un alésage avec un filetage intérieur.

9. Pale de rotor d'éolienne comprenant une unité de raccordement et de fixation (32) selon l'une des revendications 1 à 8, dans laquelle la pale de rotor d'éolienne présente des composants d'un système de protection contre la foudre et l'unité de raccordement et de fixation (32) est intégrée dans la pale de rotor d'éolienne et les moyens d'assemblage sont assemblés avec l'un au moins des composants du système de protection contre la foudre.

10. Procédé pour le montage de composants d'un système de protection contre la foudre sur une pale de rotor d'éolienne, comprenant les étapes suivantes :
• intégration d'une unité de raccordement et de fixation (32) dans une pale de rotor d'éolienne, l'unité de raccordement et de fixation (32) présentant un espace creux (40) susceptible d'être fermé hermétiquement, dans lequel sont disposés des moyens d'assemblage pour l'assemblage avec l'un au moins des composants du système de protection contre la foudre, l'unité de raccordement et de fixation (32) présentant un corps de base (36) constitué d'un matériau électriquement isolant et un corps de raccordement (38) constitué d'un matériau électriquement conducteur, le corps de base (36) et le corps de raccordement (38) étant assemblés fixement l'un avec l'autre et l'espace creux (40) étant disposé entre le corps de base (36) et le corps de raccordement (38),
• ouverture de l'espace creux (40) avant l'assemblage des moyens d'assemblage avec l'au moins un composant du système de protection contre la foudre, et
• assemblage des moyens d'assemblage avec l'au moins un composant du système de protection contre la foudre.

11. Procédé selon la revendication 10, **caractérisé en ce que** l'au moins un composant du système de protection contre la foudre est un récepteur de foudre (76).

12. Procédé selon la revendication 10 ou 11, **caractérisé par** l'étape supplémentaire suivante :
• assemblage d'un conducteur de paratonnerre (28) avec l'unité de raccordement et de fixation (32).

13. Procédé selon l'une des revendications 10 à 12, **caractérisé en ce que** la pale de rotor d'éolienne présente une paroi réalisée comme une structure en sandwich, dans laquelle est intégrée l'unité de raccordement et de fixation (32), l'unité de raccordement et de fixation (32) étant disposée entre une première couche de couverture (16) et une deuxième couche de couverture (46) lors de la fabrication de la paroi.

14. Procédé selon la revendication 12 ou 13, **caractérisé en ce que** la pale de rotor d'éolienne présente deux demi-coques (62, 64), dans lequel l'unité de raccordement et de fixation (32) est intégrée dans l'une des demi-coques (62), et l'intégration de l'unité de raccordement et de fixation (32) dans l'une des demi-coques (62) ainsi que l'assemblage de l'unité de raccordement et de fixation (32) avec le conducteur de paratonnerre (28) sont réalisés avant une jonction des deux demi-coques (62, 64), et l'assemblage des moyens d'assemblage avec le récepteur de foudre (76) est réalisé par la suite.

15. Procédé selon la revendication 14, **caractérisé en ce qu'**une unité de raccordement et de fixation (32) supplémentaire est intégrée dans l'autre des deux demi-coques (62), laquelle présente un espace creux (40) susceptible d'être fermé hermétiquement, dans lequel sont disposés des moyens d'assemblage pour l'assemblage avec l'un au moins des composants du système de protection contre la foudre, dans lequel, après la jonction des deux demi-coques (62, 64), une ligne électrique (66) est introduite dans la pale de rotor d'éolienne et reliée électriquement aux moyens d'assemblage des deux unités de raccordement et de fixation (32).
